# EUROPÄISCHE PATENTSCHRIFT

(11) **EP 1 011 178 B1**
(45) Veröffentlichungstag und Bekanntmachung des Hinweises auf die Patenterteilung: **17.03.2004**
(21) Anmeldenummer: 99116490.6
(22) Anmeldetag: 23.08.1999
(51) Int. Cl.: H01S 3/067, G02B 6/36

(54) **Leistungsverstärker zum Verstärken einer Laserstrahlung, Verfahren zur Herstellung und Verwendung des Leistungsverstärkers**
Laser power amplifier and method of making and using the same
Amplificateur laser de puissance, procédé de production et son utilisation

(30) Priorität: 15.12.1998 CH 247898
(43) Veröffentlichungstag der Anmeldung: 21.06.2000
(73) Patentinhaber: Contraves Space AG, 8052 Zürich (CH)
(72) Erfinder: Fischer, Edgar, Dr., 8555 Müllheim Dorf (CH); Herren, Andreas, 8121 Benglen (CH)
(74) Vertreter: OK pat AG

(56) Entgegenhaltungen:
- EP-A- 0 840 411
- EP-A- 0 878 880
- PATENT ABSTRACTS OF JAPAN vol. 016, no. 162 (E-1192), 20. April 1992 (1992-04-20) & JP 04 011794 A (FURUKAWA ELECTRIC CO LTD:THE), 16. Januar 1992 (1992-01-16)

## Beschreibung

Die Erfindung betrifft einen Leistungsverstärker zum Verstärken einer Laserstrahlung nach dem Oberbegriff des Patentanspruchs **1**, ein Verfahren zur Herstellung des Leistungsverstärkers nach dem Oberbegriff des Patentanspruchs **11** und eine Verwendung des Leistungsverstärkers nach dem Oberbegriff des Patentanspruchs **12.**

Zur Verstärkung einer Laserstrahlungen mittels einer optischen Verstärkerfaser, also einer Glasfaser, werden im allgemeinen mehrere Meter dieser Verstärkerfaser benötigt. Diese Verstärkerfaser wird herkömmlicherweise in Form einer Luftspule angeordnet. Es ist bekannt, dass die Effizienz eines Leistungsverstärkers in einfacher Weise dadurch gesteigert werden kann, dass man die Verstärkerfaser nicht in längs einer Geraden sondern längs einer gekrümmten Linie anordnet, wobei die bestens Ergebnisse erzielt werden, wenn sich die Krümmung längs der Linie sowohl betragsmässig wie auch vorzeichenmässig ändert.

Die Anordnung der Verstärkerfaser als freie Spule hat, insbesondere bei der Verwendung des Leistungsverstärkers im Vakuum den Nachteil, dass die Abfuhr von Verlustwärme aus der Verstärkerfaser, welche beispielsweise pumplichtbedingt infolge von Leistungsverlusten in der Verstärkerfaser entsteht, nicht in genügendem Masse gewährleistet ist. Die Folgen der ungenügenden Wärmeabfuhr sind eine ungleichmässige Temperaturverteilung und ggfs. eine Überhitzung der Verstärkerfaser.

EP-A-0 840 411 offenbart einen Leistungsverstärker gemäß dem Oberbegriff den Anspruchs 1.

Es ist die Aufgabe der Erfindung,
- einen verbesserten Leistungsverstärker der eingangs genannten Art zu schaffen, welcher die Nachteile des Standes der Technik vermeidet;
- ein Verfahren zur Herstellung eines solchen Leistungsverstärkers aufzuzeigen; und
- eine Verwendung eines solchen Leistungsverstärkers vorzuschlagen.

Diese Aufgabe wird erfindungsgemäss gelöst
- für den erfindungsgemässen Leistungsverstärker durch die Merkmale des kennzeichnenden Teils des Anspruchs **1**;
- für das erfindungsgemässe Verfahren durch die Merkmale des kennzeichnenden Teils des Anspruchs **11**; und
- für die erfindungsgemässe Verwendung durch die Merkmale des kennzeichnenden Teils des Anspruchs **12**.

Vorteilhafte Weiterbildungen des erfindungsgemässen Leistungsverstärkers sind durch die Ansprüche **2** bis **10** definiert.

Beim Leistungsverstärker nach der Erfindung wird die Verstärkerfaser nicht nur - wie bei herkömmlichen Anordnungen - an einigen Stellen gehalten, sondem in einer Ausnehmung eines Aufnahmekörpers angeordnet, der aus einem Material besteht, dessen Wärmeleitfähigkeit eine genügende Ableitung der in der Verstärkerfaser entstehenden Wärme gewährleistet. Die Verstärkerfaser ist also im wesentlichen über ihre ganze am oder im Aufnahmekörper fixiert. Diese Fixierung der Verstärkerfaser am oder im Aufnahmekörper erlaubt es ausserdem, grössere Variationen der Krümmung der Verstärkerfaser über eine geringere Länge vorzunehmen als bei freien bzw. nur punktuell gehaltenen Verstärkerfasern, was zu einer Steigerung der Effizienz führt.

Um eine einwandfreie Funktion des Leistungsverstärkers zu gewährleisten, muss vermieden werden, dass Unterschiede in den Wärmedehnungen der Verstärkerfaser und des Aufnahmekörpers entstehen. Zu diesem Zwecke werden für die Verstärkerfaser und den Aufnahmekörper Materialien verwendet werden, deren Wärmedehnungskoeffizienten aneinander angepasst sind.

Werden für die Verstärkerfaser und den Aufnahmekörper Materialien mit unterschiedlicher Wärmedehnung verwendet, so muss darauf geachtet werden, dass diese unterschiedlichen Wärmedehnungen nicht zu einer unzulässig hohen mechanischen Beanspruchung oder gar zu einem Bruch der Verstärkerfaser führen; dies kann geschehen, indem die Verstärkerfaser zwar nahezu über ihre gesamte Länge fixiert wird, jedoch fixierungsfreie Zonen aufweist, in denen sie sich relativ zum Aufnahmekörper bewegen kann.

Ein weiterer Vorteil der neuen Anordnung ist es, dass bei geeigneter Ausbildung und Anordnung des Aufnahmekörpers dieser gleichzeitig als Abschirmvorrichtung, gegen hochenergetische Strahlung und insbesondere für die Verstärkerfaser, dienen kann.

Vorzugsweise wird beim neuen Leistungsverstärker die Verstärkerfaser an der Oberfläche des Aufnahmekörpers, im allgemeinen in einer Nut, angeordnet. Die maximale Breite und die Tiefe der Nut sind dabei um ein weniges grösser als der Durchmesser der Verstärkerfaser.

Der Aufnahmekörper hat vorzugsweise die Form einer Platte oder Schale.

Die Effizienz solcher Leistungsverstärker kann, wie schon erwähnt, gesteigert werden, wenn die Verstärkerfaser in Form einer gekrümmten Linie angeordnet wird, vorzugsweise mit einer Krümmung, die sich betragsmässig und vorzeichenmässig längs der Linie ändert. Besonders günstig ist es, die Verstärkerfaser zickzackförmig oder in mehreren, etwa parallelen Windungen, beispielsweise spiral-, nieren-, keulen-, hantel- oder mäanderförmig anzuordnen. Dabei liegen dann jeweils mindestens zwei Bereiche der Verstärkerfaser etwa parallel nebeneinander.

Bei Anordnung der Verstärkerfaser in einer Nut des Aufnahmekörpers und in der soeben erwähnten Form mit mehreren Windungen sind die jeweils etwa parallel verlaufenden, benachbarten Nut-Abschnitte, in welchen entsprechende Bereiche der Verstärkerfaser angeordnet sind, durch einen Damm bzw. eine Wand aus dem Material des Aufnahmekörpers voneinander getrennt. Der Damm ist in entsprechender Weise gekrümmt wie die Nut bzw. die Verstärkerfaser. Zur Fixierung der Verstärkerfaser an einer ersten Nutstelle wird durch eine Deformation des Dammes die Nut an einer zweiten Nutstelle, nämlich an derjenigen Stelle der nächsten Windung, die der ersten Nutstelle benachbart ist, aufgeweitet; dadurch wird die erstgenannte Nutstelle soweit verengt, dass die Verstärkerfaser dort befestigt ist. Entsprechend erfolgt die Befestigung bzw. Fixierung der Verstärkerfaser an weiteren Nutstellen.

Zur Erleichterung der Fixierung der Verstärkerfaser durch bereichsweise Deformation des Dammes sind bei einem bevorzugten Ausführungsbeispiel im Aufnahmekörper quer zur Nut vorgesehene Schlitze angebracht, durch welche der Damm in leicht deformierbare Lappen unterteilt wird. Diese werden dann in Schlitzrichtung so gebogen, dass sie einen der benachbarten Nutabschnitte mit der darin befindlichen Verstärkerfaser überdecken.

Eine andere Art der Fixierung der Verstärkerfaser besteht darin, den Querschnitt der Nut so auszubilden, dass er in einem gewissen Abstand vom Nuteingang schmaler ist als beim Nuteingang; als Beispiel einer solchen Formgebung soll ein schwalbenschwanzähnlicher Querschnitt genannt sein. Die Verstärkerfaser wird dann durch elastische Deformation des Dammes bzw. der Wand in die Nut eingebracht und anschliessend dort gehalten.

Die Verstärkerfaser kann auch mittels eines Klebstoffes oder Lackes am Aufnahmekörper fixiert werden.

Beim erfindungsgemässen Verfahren zur Herstellung eines Leistungsverstärkers, bei welchem die Verstärkerfaser in einer Nut angeordnet ist, kann diese Nut durch chemische, elektroerosive, oder durch spanlose oder spanabhebende mechanische Bearbeitung erzeugt werden.

Leistungsverstärker nach der Erfindung werden häufig in mobilen Apparaturen, beispielsweise in Terminals zur optischen Datenübertragung im Weltraum, verwendet. Hierbei werden erfindungsgemäss die Aufnahmekörper aus einem Material hergestellt, das nicht nur eine hohe Wärmeleitfähigkeit aufweist sondern das auch verhältnismässig leicht ist, beispielsweise aus Aluminium, einem Aluminiumoxyd, Aluminiumnitrid, Beryyliumoxyd, Bornitrid oder Kupfer-Wolfram; in Frage kommen auch geeignete Kunststoffe, die allerdings keine Abschirmwirkung entfalten und aus diesem Grunde nicht geeignet sind in Fällen, in welchen eine solche Abschirmwirkung erforderlich ist.

Weitere Eigenschaften und Vorteile der Erfindung werden im folgenden anhand von Ausführungsbeispielen und mit Bezug auf die Zeichnung ausführlich beschrieben. Es zeihen:
- **Fig. 1**: einen Aufnahmekörper mit einer darin angeordneten Verstärkerfaser, ausschnittweise, in einem Schaubild;
- **Fig. 2**: eine Verstärkerfaser in spiralartiger Anordnung, in Draufsicht;
- **Fig. 3**: eine Verstärkerfaser in keulenartiger Anordnung, in Draufsicht;
- **Fig. 4**: eine Verstärkerfaser in mäanderartiger Anordnung, in Draufsicht;
- **Fig. 5**: einen Aufnahmekörper, mit einer sich über ihre Höhe nicht verändernden Nut, zur Aufnahme der Verstärkerfaser, in einem Schnitt quer zur Längsrichtung der Nut;
- **Fig. 6**: einen Aufnahmekörper, mit einer sich über ihre Höhe verändernden Nut, zur Aufnahme der Verstärkerfaser, in einem Schnitt quer zur Längsrichtung der Nut;
- **Fig. 7**: einen Aufnahmekörper mit einer mittels eines Klebstoffes an seiner Oberfläche befestigten Verstärkerfaser, in einem Schnitt quer zur Längsrichtung der Verstärkerfaser;
- **Fig. 8**: einen Aufnahmekörper mit Teilen von zwei Windungen einer Verstärkerfaser, welche in benachbarten Abschnitten einer Nut aufgenommen ist, in Draufsicht; und
- **Fig. 9**: einen Aufnahmekörper mit einer Verstärkerfaser in einer Nut, wobei der Damm durch Schlitze in Lappen unterteilt ist.

An dieser Stelle sei darauf hingewiesen, dass die Figuren nicht massstäblich sind und dass sich Angaben wie beispielsweise 'oben' und 'unten' auf die Anordnung in der jeweiligen Figur beziehen.

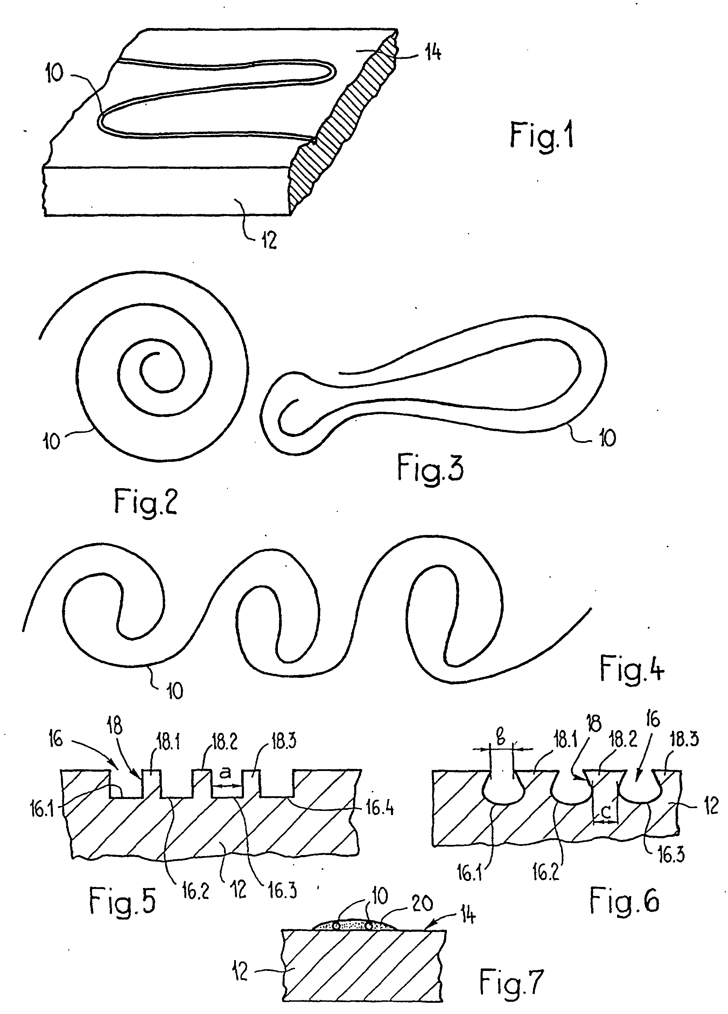

**Fig. 1** zeigt eine für einen erfindungsgemässen Leistungsverstärker bestimmte Verstärkerfaser **10,** welche in einem plattenförmigen Aufnahmekörper **12** angeordnet ist. Die Verstärkerfaser **10** folgt einer zickzackartig gekrümmten Linie, wobei die Krümmung längs der Verstärkerfaser 10 nicht konstant ist sondem sich - zur Erhöhung der Effizient des Leistungsverstärkers - sowohl betragsmässig wie auch vorzeichenmässig ändert. Die Verstärkerfaser **10** befindet sich hier in einer nicht dargestellten Nut an der Oberfläche **14** des Aufnahmekörpers **12.** Sie könnte aber auch an der Oberfläche 14 des Aufnahmekorpers **12** nicht Teil der Erfindung oder im Inneren des Aufnahmekörpers **12** angeordnet sein.

Die **Fig. 2, 3** und **4** zeigen Verstärkerfasern **10,** welche in ihrem örtlichen Verlauf anderen gekrümmten Linien, jeweils mit mehreren Windungen, folgen als die in **Fig. 1** dargestellte Verstärkerfaser **10,** nämlich gemäss **Fig. 2** einer spiralenartigen Linie, gemäss **Fig. 3** einer keulenartigen Linie und gemäss **Fig. 4** einer mäanderartigen Linie. Die minimale Krümmung muss jeweils so bemessen sein, dass jede Bruchgefahr für die Verstärkerfaser **10** vermieden wird. Die Linien können auch dreidimensional sein, was bezüglich der Steigerung der Effizienz des Leistungsverstärkers vorteilhaft ist, jedoch die Anordnung im Aufnahmekörper bedeutend kompliziert.

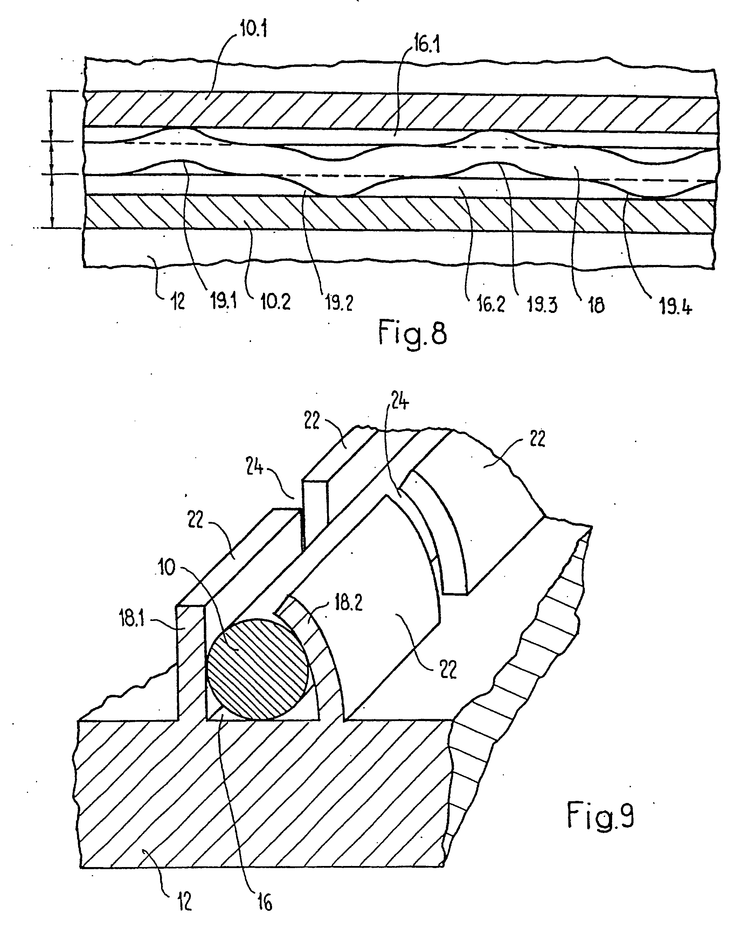

**Fig. 5** zeigt einen Aufnahmekörper **12** mit einer Nut **16** zur Aufnahme der zylindrischen Verstärkerfaser **10**. Die Nut **16** ist zur Aufnahme einer zickzackartig bzw. in Windungen angeordneten, in **Fig. 5** nicht dargestellten Verstärkerfaser bestimmt und ist demzufolge ebenfalls zickzackartig bzw. in Windungen ausgebildet. Im Querschnitt benachbarte Nut-Abschnitte **16.1, 16.2, 16.3** sind durch entsprechende Wand- bzw. Dammabschnitte **18.1, 18.2, 18.3** einer durch das Material des Aufnahmekörpers **12** gebildeten Wand bzw. eines Dammes **18** getrennt. Die Nut **16** ist im Querschnitt etwa quadratisch, wobei die Seitenlänge a des Quadrates etwas grösser ist als der Durchmesser der Verstärkerfaser, welche in der Nut **16** anzuordnen ist. Die Fixierung der Verstärkerfaser in einer solchen im Querschnitt quadratischen Nut **16** erfolgt mit Hilfe eines Lackes oder Klebstoffes und/oder durch örtliche Deformationen des Dammes **18,** wie dies weiter unten mit Bezug auf **Fig. 8** und **Fig. 9** beschrieben wird.

In **Fig. 6** ist ein weiterer Aufnahmekörper **12** mit einer weiteren Nut **16** dargestellt. Im Gegensatz zur Nut **16** gemäss **Fig. 5**, welche über ihre Höhe den gleichen Querschnitt bzw. die gleiche Breite a aufweist, ändert sich der Querschnitt der Nut **16** gemäss **Fig. 6**. Die Nut **16** weist hier einen Eingang auf, dessen Breite **b** etwas geringer ist als der Durchmesser der Verstärkerfaser, die in ihr anzuordnen ist, erweitert sich dann aber mindestens bis auf den Durchmesser der Verstärkerfaser und verengt sich weiter unten wieder. Diese Nut **16** ist also im Querschnitt etwa schwalbenschwanzähnlich. Der Damm **18** ist in seiner Querschnittsform komplementär zur Nut **16**. Das Einbringen der Verstärkerfaser in die Nut **16** erfolgt hier unter elastischer Deformation des Dammes **18**; diese Deformation wird erleichtert durch die geringe Breite **c** des schmalsten Teiles des Dammes **18**. Nach dem Einbringen der Verstärkerfaser in die Nut **16** nimmt der Damm **18** wieder seine ursprüngliche Form an, so dass die Verstärkerfaser wegen der geringen Breite **b** des Eingang der Nut **16** diese nicht mehr verlassen kann.

**Fig. 7** zeigt einen Aufnahmekörper **12** mit einer auf seiner Oberfläche **14**, jedoch nicht in einer Nut angeordneten Verstärkerfaser **10,** welche mittels einer Raupe **20** aus Klebstoff oder Lack fixiert ist.

In **Fig. 8** ist ausschnittweise ein Aufnahmekörper **12** dargestellt, mit einer Nut **16** und einer in der letzteren angeordneten Verstärkerfaser **10,** wobei zwei Nut-Abschnitte **16.1, 16.2** der Nut **16** und zwei Teile **10.1, 10.2** der Verstärkerfaser **10** parallel angeordnet sind. Die Nut-Abschnitte **16.1, 16.2** sind durch einen entsprechenden, ebenfalls parallelen Damm-Abschnitt des Dammes **18** voneinander getrennt. Dieser Abschnitt des Dammes **18** ist in vier Bereichen **19.1, 19.2, 19.3, 19.4** deformiert. Durch die deformierten Bereiche **19.1, 19.3** des Dammes **18** ergibt sich eine Erweiterung des Nut-Abschnittes **16.2** an zwei Stellen und gleichzeitig eine Verengung des Nut-Abschnittes **16.1** an den benachbarten Stellen, so dass an diesen beiden letztgenannten Stellen eine Fixierung der Teiles **10.1** der Verstärkerfaser **10** erfolgt. Entsprechend ergibt sich durch die deformierten Bereiche **19.2, 19.4** des Dammes **18** eine Erweiterung des Nut-Abschnittes **16.1** sowie eine Verengung des Nut-Abschnittes **16.1** an je zwei Stellen und damit eine Fixierung des Teiles **10.2** an diesen beiden letztgenannten Stellen.

**Fig. 9** zeigt einen Aufnahmekörper **12** mit einer Verstärkerfaser **10**, die in einer Nut **16** angeordnet ist. Beidseitig der Nut **16** befindet sich je ein Abschnitt **18.1** bzw. **18.2** des Dammes **18**. Der Damm **18** ist durch Schlitze **24** in Lappen **22** unterteilt. Zur Fixierung der Verstärkerfaser **10** in der Nut **16** sind die Lappen **22** deformiert, derart, dass die oberen freien Kantenbereiche der Lappen **22** über die Verstärkerfaser **10** ragen. In der Darstellung gemäss **Fig. 9** sind nur zwei der Lappen **22** in deformierter Stellung abgebildet. Es ist leicht einzusehen, dass die Richtungen, in welcher die Deformation der Lappen erfolgt, so gewählt werden müssen, dass nicht nur der in **Fig. 9** dargestellte Teil der Verstärkerfaser **10** sondern auch benachbarte, nicht dargestellte Teile derselben fixiert werden.

## Patentansprüche

1. Leistungsverstärker zur Verstärkung einer Laserstrahlung, mit einer Verstärkerfaser (**10**), die längs einer gekrümmten Linie mit örtlich ändernder Krümmung angeordnet ist,
und einem Aufnahmekörper (**12**), in dem die Verstärkerfaser (**10**) aufgenommen ist, **dadurch gekennzeichnet, dass**
der Aufnahmekörper (**12**) eine genügende thermische Leitfähigkeit besitzt, um die Ableitung von in der Verstärkerfaser (**10**) entstehender Wärme zu gewährleisten.

2. Leistungsverstärker nach Anspruch **1,**
**dadurch gekennzeichnet,**
**dass** die Verstärkerfaser (**10**) und der Aufnahmekörper (**12**) aus Materialien hergestellt sind, deren Wärmedehnungskoeffizienten aneinander angepasst sind.

3. Leistungsverstärker nach Anspruch **1,**
**dadurch gekennzeichnet,**
**dass** die Verstärkerfaser (**10**) so im Aufnahmekörper (**12**) angeordnet ist, dass bei einem Unterschied zwischen den Wärmedehnungen der Verstärkerfaser (**10**) und des Aufnahmekörpers (**12**) die mechanische Beanspruchung der Verstärkerfaser (**10**) für die Funktion des Leistungsverstärkers unbedeutend ist.

4. Leistungsverstärker nach mindestens einem der Ansprüche **1** bis **3**,
**dadurch gekennzeichnet,**
**dass** der Aufnahmekörper (**12**) so ausgebildet ist, dass er eine Abschirmvorrichtung, insbesondere für die Verstärkerfaser (**10**) und insbesondere gegen hochenergetische Strahlung, bildet.

5. Leistungsverstärker nach mindestens einem der Ansprüche **1** bis **4**,
**dadurch gekennzeichnet,**
**dass** die Verstärkerfaser (**10**) an einer Aussenfläche (**14**) des Aufnahmekörpers (**12**), vorzugsweise in einer Nut (**16**), angeordnet ist.

6. Leistungsverstärker nach mindestens einem der Ansprüche **1** bis **5,**
**dadurch gekennzeichnet,**
**dass** der Aufnahmekörper (**12**) die Form einer Platte oder Schale hat.

7. Leistungsverstärker nach mindestens einem der Ansprüche **1** bis **6,**
**dadurch gekennzeichnet,**
die Verstärkerfaser (**10**) mindestens bereichsweise längs mehreren einander benachbarten Windungen, zum Beispiel in Zickzack-, Spiral-, Nieren-, Keulen-, Hantel- oder Mäanderform, verläuft, derart, dass aufeinanderfolgende Teile (**10.1, 10.2**) der Verstärkerfaser (**10**) etwa parallel nebeneinander liegen.

8. Leistungsverstärker nach Anspruch **5,**
**dadurch gekennzeichnet,**
**dass** die Verstärkerfaser (**10**) durch bereichsweise Deformation eines die benachbarten Nut-Abschnitte (**16.1, 16.2**) trennenden Dammes (**18**) in der Nut (**16**) gehalten ist.

9. Leistungsverstärker nach Anspruch 8,
**dadurch gekennzeichnet,**
**dass** der Damm (**18**) quer zur Nut (**16**) angeordnete Schlitze (**20**) aufweist, wobei die die Nut-Abschnitte (**16.1, 16.2**) trennenden Abschnitte des Dammes (**18**) durch die Schlitze (**20**) in zur Fixierung der Verstärkerfaser (**10**) leicht deformierbare Lappen (**22**) unterteilt sind, welche in Richtung der Schlitze (**20**) über die Verstärkerfaser (**10**) biegbar sind.

10. Leistungsverstärker nach Anspruch **4,**
**dadurch gekennzeichnet,**
**dass** die Verstärkerfaser (**10**) mittels eines Klebstoffes oder Lackes am Aufnahmekörper (**12**) befestigt ist.

11. Verfahren zur Herstellung eines Leistungsverstärkers nach Anspruch **5,** wobei die Nut (**16**) im Aufnahmekörper (**12**) durch chemische, elektroerosive oder spanlose oder spanabhebende mechanische Bearbeitung erzeugt wird.

12. Verwendung des Leistungsverstärkers nach einem der Ansprüche **1** bis **10** in einem mobilen Gegenstand, beispielsweise in einem Terminal zur optischen Datenübertragung im Weltraum,
wobei der Aufnahmekörper (**12**) aus einem leichten Material, beispielsweise aus Aluminium, einer Aluminiumlegierung, Aluminiumnitrid, Berylliumoxyd, Bomitrid, Kupfer-Wolfram oder einem leitenden Kunststoff, hergestellt ist.

## Claims

1. Output amplifier for amplification of laser radiation with an amplifier fibre (**10**) arranged along a curving line with locally variable curvature and a substrate (**12**) in which the amplifier fibre (**10**) is accommodated,
**characterized in that**
the substrate (**12**) possesses sufficient thermal conductivity to dissipate heat generated in the amplifier fibre (**10**).

2. Output amplifier according to Claim **1,**
**characterized in that**
the amplifier fibre (10) and the substrate (12) are made from materials with matching coefficients of thermal expansion.

3. Output amplifier according to Claim **1**,
**characterized in that**
the amplifier fibre (**10**) is so arranged in the substrate (**12**) that in the event of a difference between the thermal expansion of the amplifier fibre (**10**) and that of the substrate (**12**), the mechanical strain on the amplifier fibre (**10**) is insignificant in its effect on the function of output amplification.

4. Output amplifier according to at least one of Claims **1** to **3**,
**characterized in that**
the substrate (**12**) is so constructed that it forms a screening function, especially for the amplifier fibre (**10**) and especially against high-energy radiation.

5. Output amplifier according to at least one of Claims **1** to **4,**
**characterized in that**
the amplifier fibre (**10**) is arranged on an outer surface (**14**) of the substrate (**12**), preferably in a groove (**16**).

6. Output amplifier according to at least one of Claims **1** to **5,**
**characterized in that**
the substrate (**12**) takes the form of a plate or shell.

7. Output amplifier according to at least one of Claims **1** to **6,**
**characterized in that**
the amplifier fibre (**10**), at least in certain places, lies in several loops, running near to each other for example in the shapes of zigzags, spirals, kidney shapes, lobes, dumb-bell shapes or meanders, so that consecutive lengths (**10.1, 10.2**) of the amplifier fibre (**10**) lie more or less parallel next to each other.

8. Output amplifier according to Claim **5,**
**characterized in that**
the amplifier fibre (**10**) is held in place in its groove (**16**) by local deformation of a ridge (**18**) separating neighbouring sections (**16.1, 16.2**) of this groove.

9. Output amplifier according to Claim **8**,
**characterized in that**
the ridge (**18**) is provided with slits (**20**) arranged perpendicular to the groove (**16**), so that the lengths of the ridge (**18**) separating the sections (**16.1, 16.2**) of the groove are divided by the slits (**20**) into easily deformable tabs (**22**) which can be bent over the amplifier fibre (**10**) towards the slits (**20**) to fix the amplifier fibre (**10**) in place.

10. Output amplifier according to Claim **4**,
**characterized in that**
the amplifier fibre (**10**) is attached to the substrate (**12**) by means of an adhesive or lacquer.

11. Procedure for the manufacture of an output amplifier according to Claim **5**,
such that the groove (**16**) is formed in the substrate (**12**) by chemical, electro-erosive, chipless or stock-removing mechanical working.

12. Application of the output amplifier according to one of Claims **1** to **10** in a mobile object, for example in a terminal for optical data transfer in space,
such that the substrate (**12**) is made from a lightweight material, for example aluminium, an aluminium alloy, aluminium nitride, beryllium oxide, boron nitride, copper-wolfram alloy or a conductive synthetic material.

## Revendications

1. Amplificateur de puissance destiné à amplifier un rayonnement laser, comprenant une fibre amplificatrice (**10**) disposée le long d'une ligne courbée dont la courbure change par endroits, et un élément de réception (**12**) dans lequel est placée la fibre amplificatrice (**10**),
**caractérisé en ce que**
l'élément de réception (**12**) possède une conductibilité thermique suffisante pour permettre de dissiper la chaleur générée dans la fibre amplificatrice (**10**).

2. Amplificateur de puissance selon la revendication **1**,
**caractérisé en ce que**
la fibre amplificatrice (**10**) et l'élément de réception (**12**) sont fabriqués dans des matériaux dont les coefficients de dilatation thermique sont adaptés l'un à l'autre.

3. Amplificateur de puissance selon la revendication **1**,
**caractérisé en ce que**
la fibre amplificatrice (**10**) est disposée, dans l'élément de réception (**12**), de telle manière que, lorsqu'il y a une différence entre la dilatation thermique de la fibre amplificatrice (**10**) et celle de l'élément de réception (**12**), la sollicitation mécanique de la fibre amplificatrice (**10**) a un impact insignifiant sur le fonctionnement de l'amplificateur de puissance.

4. Amplificateur de puissance selon au moins l'une des revendications **1** à **3**,
**caractérisé en ce que**
l'élément de réception (**12**) est conçu de telle manière qu'il forme un dispositif de blindage, en particulier pour la fibre amplificatrice (**10**) et en particulier contre un rayonnement de grande énergie.

5. Amplificateur de puissance selon au moins l'une des revendications **1** à **4**,
**caractérisé en ce que**
la fibre amplificatrice (**10**) est disposée contre une surface externe (**14**) de l'élément de réception (**12**), de préférence dans une rainure (**16**).

6. Amplificateur de puissance selon au moins l'une des revendications **1** à **5,**
**caractérisé en ce que**
l'élément de réception (**12**) est en forme de plaque ou de coupe.

7. Amplificateur de puissance selon au moins l'une des revendications **1** à **6,**
**caractérisé en ce que**
la fibre amplificatrice (**10**) fait, au moins dans certains secteurs, des tours ayant par exemple la forme d'un zigzag, d'une spirale, d'un ovale, d'un lobe, d'une haltère ou d'un méandre, de sorte que des parties consécutives (**10.1, 10.2**) de la fibre amplificatrice se trouvent l'une à côté de l'autre de façon à peu près parallèle.

8. Amplificateur de puissance selon la revendication **5**,
**caractérisé en ce que**
la fibre amplificatrice (**10**) est maintenue dans la rainure (**16**) par une déformation partielle d'un élément de barrage (**18**) séparant les sections de rainure contiguës (**16.1, 16.2**).

9. Amplificateur de puissance selon la revendication **8**,
**caractérisé en ce que**
l'élément de barrage (**18**) comporte des entailles (**20**) placées de façon perpendiculaire par rapport à la rainure (**16**), les sections de l'élément de barrage (**18**) séparant les sections de rainure (**16.1, 16.2**) étant subdivisées, par les entailles (**20**), en languettes (**22**) pouvant être facilement déformées afin de fixer la fibre amplificatrice (**10**) et pouvant être courbées dans le sens des entailles (**20**) au-dessus de la fibre amplificatrice (**10**).

10. Amplificateur de puissance selon la revendication **4,**
**caractérisé en ce que**
la fibre amplificatrice (**10**) est fixée sur l'élément de réception (**12**) à l'aide de colle ou de laque.

11. Procédé destiné à la fabrication d'un amplificateur de puissance selon la revendication **5,**
la rainure (**16**) étant créée dans l'élément de réception (**12**) par un usinage chimique, électro-érosif ou mécanique par ou sans enlèvement de copeaux.

12. Utilisation de l'amplificateur de puissance selon l'une des revendications **1** à **10** dans un objet mobile, tel qu'un terminal servant à la transmission optique de données dans l'espace extra-atmosphérique,
l'élément de réception (**12**) étant fabriqué dans un matériau léger tel que de l'aluminium, un alliage d'aluminium, du nitrure d'aluminium, de l'oxyde de béryllium, du nitrure de bore, du cuivre-tungstène ou un matériau synthétique conducteur.
